Europäisches Patentamt

European Patent Office

Office européen des brevets

(19)

(11) Publication number: **0 405 835 A2**

# EUROPEAN PATENT APPLICATION

(21) Application number: 90306759.3

(51) Int. Cl.⁵: **G01F 23/24**

(22) Date of filing: **20.06.90**

(30) Priority: **28.06.89 US 372981**

(43) Date of publication of application:
**02.01.91 Bulletin 91/01**

(84) Designated Contracting States:
**DE FR GB IT NL**

(71) Applicant: **TEXAS INSTRUMENTS
INCORPORATED
13500 North Central Expressway
Dallas Texas 75265(US)**

(72) Inventor: **Kawate, Keith W.
12 Virginia Avenue
Attleboro Falls, MA 02763(US)**
Inventor: **Sogge, Dale R.
29 Stone Ridge Road
Franklin, MA 02038(US)**

(74) Representative: **Abbott, David John et al
Abel & Imray Northumberland House 303-306
High Holbornorn
London, WC1V 7LH(GB)**

(54) Two wire coolant level sensor.

(57) A two wire circuit for indicating liquid level in an automobile utilizing an incandescent lamp to provide the alarm signal with the power required to energize the circuit being derived via the lamp whereby the lamp and the circuit are serially connected between the battery terminals. The alarm circuits are provided with an oscillator which perfcrms the dual functions of providing the detection signal through the probe and the drive signal for the output transistor controlling the lamp. In a first embodiment, signal pulses from an oscillator provide signals to an output circuit as well as to the detection probe in the form of pulses, the pulses to the probe controlling a latch responsive to the output of a Schmitt trigger. The Schmitt trigger output is determined by the status of the probe in response to the signal thereto from the oscillator. The delay and output circuits are simultaneously controlled by the same oscillator pulses and the output of the latch to control operation of a lamp. Sufficient current always travels through the lamp to provide power to the remainder of the circuit. In a second embodiment, the output circuit is an SCR which stays on once latched until power thereacross is removed. In addition, positive and negative feedback are provided from the output to the input of the operational amplifier, the positive feedback path being shunted to reference potential when the probe resistance is low to provide no output from the op amp and therefore maintain the SCR off. When the probe resistance increases, the positive feedback becomes dominant and causes an oscillation to appear from the op amp which turns on the SCR and therefore the lamp also turns on. A further embodiment includes circuitry to provide lamp turn-on and/or turn-off time delay.

FIG. 1

# TWO WIRE COOLANT LEVEL SENSOR

## CROSS REFERENCE TO PRIOR APPLICATION

This application is a continuation-in-part of serial number 07/233,698, filed August 8, 1988.

## BACKGROUND OF THE INVENTION

### FIELD OF THE INVENTION

This invention relates to a liquid level sensor and, more specifically, to a liquid level sensor for use primarily in an automotive environment which is capable of operation using only two wires.

### BRIEF DESCRIPTION OF THE PRIOR ART

Liquid level sensors or detectors for determining the level of electrically conductive liquid in a tank or for determining when the level of the electrically conductive liquid in a tank has dropped below a predetermined level are well known and many devices for measuring and/or detecting such levels have been known going into the distant past.

Such liquid level detectors are often called upon to determine when the liquid level in a tank of electrically conductive liquid has fallen below some predetermined level and to provide an indication or alarm in response thereto. One such environment Wherein this problem exists, which is provided herein only by way of example and not by way of limitation, is in the radiator of an automobile wherein it is necessary that the liquid level be above some predetermined minimum. Liquid level sensing and alarm systems for this problem have been designed in the past, such systems generally requiring three wires, one for power, one for output and one for a ground connection. It is highly advantageous, especially with the continually greater number of wires present in automobiles, to minimize the number of wires required therein to perform a selected number of functions. This can be accomplished by providing a circuit which is capable of operating with a diminished number of wires therefrom.

## SUMMARY OF THE INVENTION

In accordance with the present invention, there are provided a plurality of circuits for measuring the level of an electrically conductive liquid, specifically, by way of example and not by way of limitation, the level of electrically conductive liquid coolant in an automobile radiator, using a two wire system as opposed to the prior art three wire system.

Briefly, the above is accomplished by utilizing an incandescent lamp to provide the alarm signal with the power required to energize the circuit being derived via the lamp whereby the lamp and the circuit are serially connected between the battery terminals (i.e., positive and negative battery terminal or ground). In addition, the alarm circuits are provided with an oscillator circuit wherein the oscillator performs the dual functions of providing the signal for detection through the probe and providing the drive signal for the output transistor which controls the lamp.

In accordance with the present invention, an oscillator provides pulses having a duty cycle from about 1 to about 50% and a frequency of from about 60 to about 10,000 hertz which are the control signals to control the output circuit for a lamp as well as the signal pulses sent to the probe to determine the status thereof. Schmitt triggers determine the status at the probe and, in response thereto, either permit the pulses from the oscillator to turn on the output to turn on the light or to shunt the pulses away from the output to turn off the light. The power for the circuit always passes through the lamp, whether or not it is illuminated.

In accordance with a second embodiment of the invention, the output circuit is an SCR which stays on once latched until power thereacross is removed. An operational amplifier is used to compare a reference impedance with the impedance present at the probe. In addition, positive and negative feedback are provided from the output to the input of the operational amplifier, the positive feedback path being shunted to reference potential (ground) when the probe resistance is low to provide no output from the op amp and therefore maintain the SCR off. When the probe resistance increases, the positive feedback becomes dominant and causes as output to appear from the op amp which turns on the SCR and therefore the lamp also turns on.

In accordance with a third embodiment in accordance with the present invention, a diode of the first embodiment is replaced by a D-latch to provide lamp turn-on and turn-of delay.

## BRIEF DESCRIPTION OF THE DRAWINGS

FIGURE 1 is a system schematic diagram in accordance with a preferred embodiment of the present invention;

FIGURE 2 is a block diagram of the preferred embodiment of the present invention;

Figure 3 is a circuit diagram of the preferred embodiment of the present invention;

FIGURE 4 is a circuit diagram of a second embodiment of the present invention; and

FIGURE 5 is a circuit diagram of a third embodiment of the present invention.

## DESCRIPTION OF THE PREFERRED EMBODIMENTS

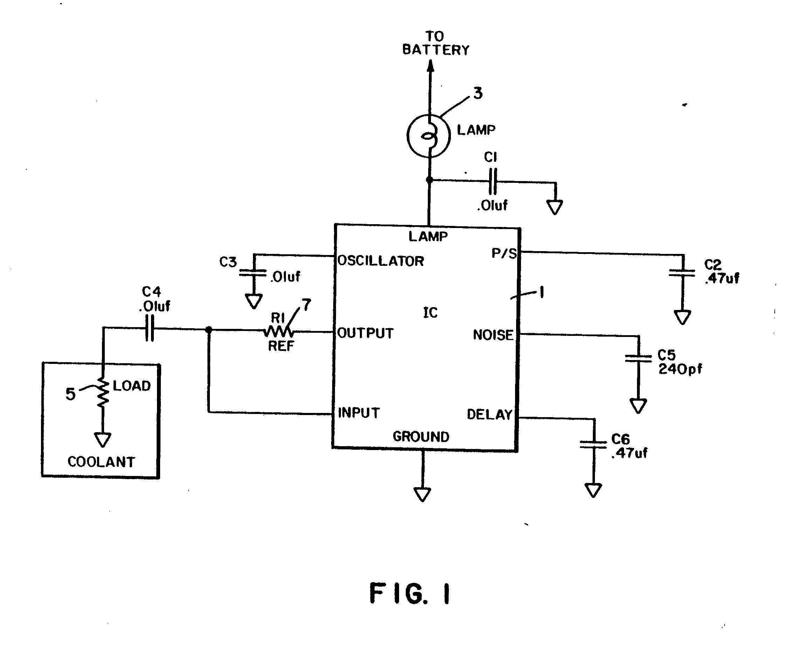

Referring first to FIGURE 1, there is provided a system schematic diagram which shows an integrated circuit (IC) 1 which contains most of the circuitry in accordance with the first embodiment of the invention. The IC has eight terminals, the top terminal being connected to reference voltage via a capacitor C1 as well as to the positive or negative battery terminal, (the particular battery terminal chosen being dependent upon the arrangement of the semiconductors in the IC) via lamp 3. The input to the IC is taken from a load 5, represented as a resistor, which is actually a probe in the liquid-containing tank which provides low resistance when disposed in the liquid being monitored and high resistance when out of the liquid. The output is connected to a reference resistor 7 which is utilized for comparison as will be discussed hereinbelow. Also shown is a ground connection which, in the case of an automobile environment, can be the chassis. The other one of the terminals of the battery will also be connected to the chassis. An oscillator terminal is coupled to reference voltage via a capacitor C3 which provides the capacitance required to set the oscillator frequency. In addition, a P/S terminal, a noise terminal and a delay terminal are each coupled to the reference voltage source via separate capacitors C2, C5 and C6 respectively. Since capacitors are not normally internal to an IC, they are shown connected to the terminals thereof and will be discussed hereinbelow in connection with the circuit of which they are a part.

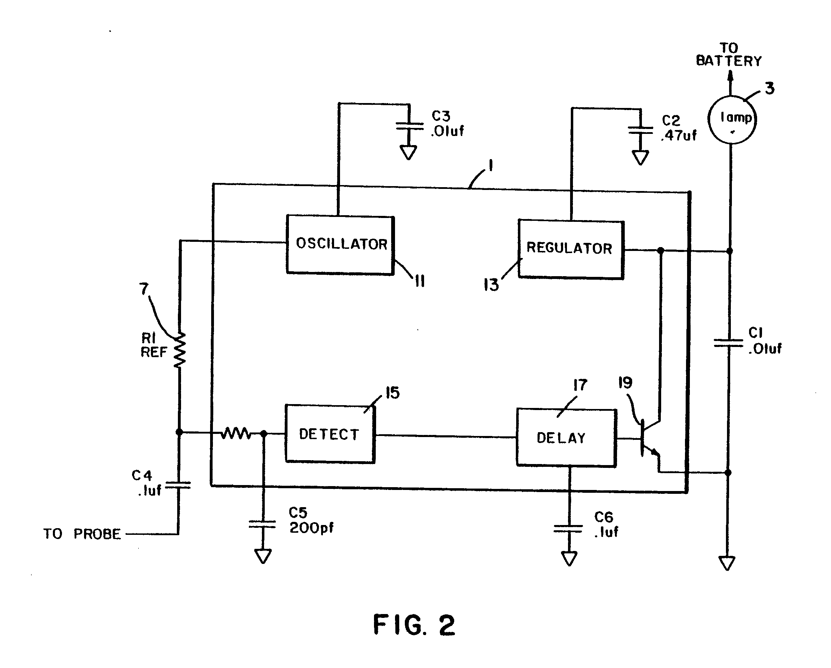

Referring now to FIGURE 2, there is shown a block diagram of the IC 1 with associated off-chip components. As can be seen, the IC includes an oscillator 11, a regulator 13, a detector 15 and a delay circuit 17. The delay circuit controls the output driver in the form of a bipolar or field effect transistor 19 which is coupled between the regulator 13 and reference voltage (e.g., ground).

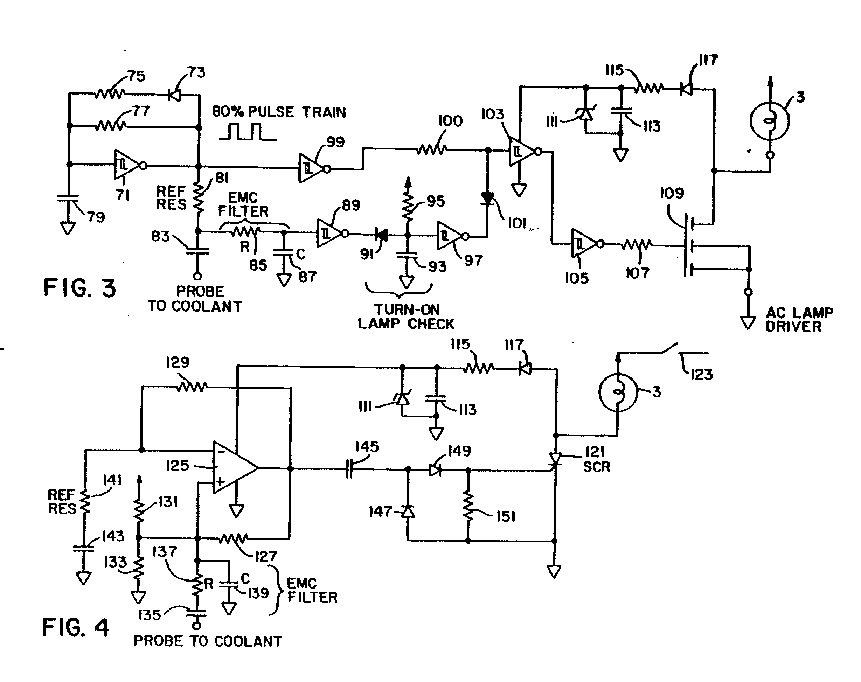

Referring now to FIGURE 3, there is shown a circuit diagram of the circuit contained in IC 1 of the preferred embodiment in accordance with the present invention. This circuit is a voltage divider circuit wherein the lamp 3 will turn off after being energized if the liquid level is restored to its normal level.

The circuit of FIGURE 3 generates an oscillator signal using a Schmitt trigger inverter 71 with a feedback network comprised of a diode 73 and resistor 75 in parallel with a resistor 77, and an integrating capacitor 79. The output of the oscillator is passed through a reference resistor 81 and then to the probe located in the coolant (not shown) via a capacitor 83. This forms a voltage divider between the resistor 81 and the impedance of the coolant. The capacitor 83 is a DC blocking capacitor since DC current will cause undesirable corrosion of other metals in the coolant. The resistor 85 and capacitor 87 filter out electromagnetic radiations in the surrounding environment. A Schmitt trigger detector 89 determines when the resistance of the probe is higher than the resistance of the reference 81.

When the resistance at the probe is higher than the reference 81, indicating that the liquid level being sensed is below the predetermined level, the input voltage to the Schmitt trigger 89 will exceed the threshold thereof, causing the output thereof to go low and discharge the capacitor 93 through diode 91. This causes the output of Schmitt trigger inverter 97 to go high and reverse bias diode 101 to permit the oscillator signal to pass via Schmitt trigger inverter 99, resistor 100, Schmitt trigger inverters 103 and 105 and resistor 107 to the gate of the lamp driver transistor 109 to provide conduction through transistor 109 and cause the lamp 3 to light. It can be seen that when the resistance at the probe is lower than the reference resistor 81, the output of Schmitt trigger 97 will be low, thereby forward biasing diode 101 and diverting the pulses from the oscillator away from the transistor 109, thereby assuring that the lamp will be off. Only sufficient current to operate the circuit without lighting the lamp will be provided through the lamp. The duty cycle will affect the brightness of the lamp.

It can be seen that the single oscillator provides two functions, these being the signal for detection through the probe and the second being to provide the drive signal for the output transistor 109. A pulse train having a duty cycle from about 1 to about 50% and a frequency from about 60 Hertz to about 10,000 Hertz provides these functions. During the off period the voltage across the transistor 109 is approximately the battery voltage, thus allowing the storage capacitor 113 to be charged through the diode 117 and resistor 115 with the zener diode 111 providing a reference voltage across the capacitor 113. The diode 117 prevents discharge of capacitor 113 when the transistor 109 is on. A regulator may be used in place of the zener diode 111.

The resistor 95 and capacitor 93 provide for the lamp 3 to flash on for a predetermined time (e.g., 1 second) whenever the circuit is powered on.

Referring now to FIGURE 4, there is shown a circuit diagram of a second embodiment in accordance with the present invention. This circuit is similar to the circuit of FIGURE 3 except that a metastable oscillator is utilized. In this circuit, the op amp circuit 125 of the oscillator has both positive feedback via resistor 127 and negative feedback via resistor 129. The positive input to the op-amp 125 is taken from a voltage divider composed of resistors 131 and 133 as well as from the positive feedback path which is also coupled to the probe via a DC blocking capacitor 135 and an EMC filter composed of resistor 137 and capacitor 139. The negative input to the comparator is taken from the negative feedback path via resistor 129 as well as the reference resistor 141 which is coupled to reference potential via capacitor 143.

The positive feedback path is shorted (placed in a low resistance path to ground) to ground through the low impedance path of the coolant when the coolant is at or above the predetermined level. Therefore the negative feedback path takes precedence and there is no AC output at the output terminal of the op amp 125. When the coolant is below the predetermined level and the impedance at the probe is high, the positive feedback path becomes dominant over the negative feedback path and the device provides an output in the form of pulses or oscillations. The output of the oscillator is fed through capacitor 145, rectified by diodes 147 and 149 and turns on the SCR 121, the gate thereof being normally held low by resistor 151. When the SCR is turned on, the lamp 3 turns on and the remainder of the circuit becomes disabled because all of the available power is travelling through the SCR. The capacitor 113, zener diode 111, resistor 115 and diode 117 provide the same functions as discussed for the like numbered elements in FIGURE 4. The only way to turn off the bulb is by removing power across the bulb, such as by opening the switch 123 to the battery.

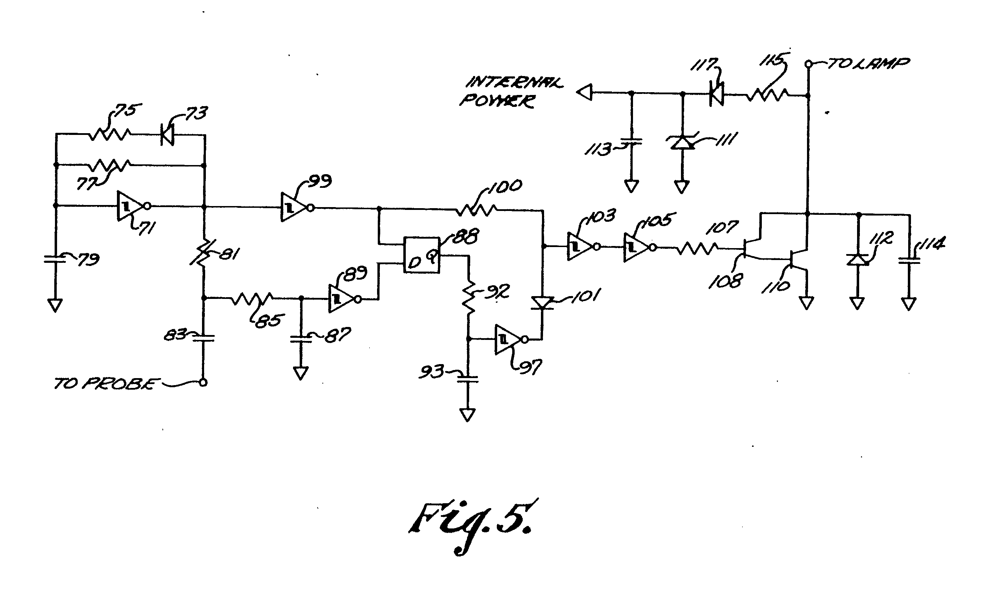

Referring now to FIGURE 5, there is shown a further embodiment of a circuit diagram of the circuit contained in IC 1 of the preferred embodiment in accordance with the present invention wherein like character references to those of FIGURE 3 represent substantially identical elements and circuit operation. Accordingly, the operation of the circuit of FIGURE 5 operates the same as that of FIGURE 3 up to the output of schmitt trigger detector 89.

As in the case of the circuit of FIGURE 3, when the resistance at the probe is higher than the reference 81, indicating that the liquid level being sensed is below the predetermined level, the input voltage to the Schmitt trigger 89 will exceed the threshold thereof, causing the output thereof to go low and change the state of D-latch 88 to discharge the capacitor 93 through diode 91. This causes the output of Schmitt trigger inverter 97 to go high and reverse bias diode 101 to permit the oscillator signal to pass via Schmitt trigger inverter 99, resistor 100, Schmitt trigger inverters 103 and 105 and resistor 107 to the gate of the lamp driver transistors 108 and 110 to provide conduction through transistor 110 and cause the lamp 3 to light. Diode 112 provides reverse battery protection. Capacitor 114 protects the output transistor from high voltage transients. It can be seen that when the resistance at the probe is lower than the reference resistor 81, the output of Schmitt trigger 97 will be low, thereby forward biasing diode 101 and diverting the pulses from the oscillator away from the transistors 108 and 110, thereby assuring that the lamp will be off. Only sufficient current to operate the circuit without lighting the lamp will be provided through the lamp. The duty cycle will affect the brightness of the lamp.

The function of the D-latch 88 is to provide lamp turn-on as well as lamp turn-off time delay to the operation of the circuit.

Though the invention has been described with respect to specific preferred embodiments thereof, many variations and modifications will immediately become apparent to those skilled in the art. It is therefore the intention that the appended claims be interpreted as broadly as possible in view of the prior art to include all such variations and modifications.

## Claims

1. A detecting circuit comprising:
   (a) a source of electrical energy;
   (b) an indicator serially connected to said source of energy; and
   (c) circuit means serially connected to said indicator and said source of electrical energy and powered by said source of electrical energy comprising:
   (d) pulse means to provide a pulse train having a predetermined frequency and duty cycle;
   (e) means responsive to pulses from said pulse means and a change in a predetermined condition to provide an indication of said change; and
   (f) means responsive to a predetermined condition of said means responsive and a pulse from said pulse means to control operation of said indicator.

2. A detecting circuit as set forth in claim 1, wherein said indicator is an incandescent lamp.

3. A detecting circuit as set forth in claim 1 or claim 2, wherein said pulse means has a duty cycle in the range of 1 to 50 per cent.

4. A detecting circuit as set forth in claim 1, 2 or 3, wherein said pulse means operates at a frequency of from about 60 to about 10,000 Hertz.

5. A detecting circuit as set forth in any preceding claim, wherein said predetermined condition is liquid level, said circuit means including means responsive to a predetermined level of an electrically conductive liquid in a reference voltage coupled container to provide an indication thereof and means responsive to said indication to provide said control of operation of said indicator.

6. A detecting circuit comprising:

(a) a source of electrical energy;

(b) an indicator connected to said source of energy; and

(c) circuit means connected to said indicator and said source of electrical energy and powered by said source of electrical energy comprising:

(d) pulse producing means to provide a pulse train having a predetermined frequency and duty cycle;

(e) detector means responsive to pulses from said pulse means and a change in a predetermined condition to provide an indication of said change; and

(f) output means responsive to a predetermined condition of said detector means and a pulse from said pulse producing means to control operation of said indicator.

7. A detecting circuit as set forth in claim 6, wherein said detector means is serially connected between said indicator and said source of electrical energy.

8. A detecting circuit as set forth in claim 6 or claim 7, wherein said pulse producing means is an oscillator having a duty cycle of from about 1 to about 50 per cent.

9. A detecting circuit as set forth in claim 6, 7 or 8, wherein said predetermined condition is liquid level, said circuit means including means responsive to a predetermined level of liquid in a container to provide an indication thereof and means responsive to said indication to provide said control of operation of said indicator.

10. A detecting circuit comprising:

(a) a source of electrical energy having positive and relatively negative terminals;

(b) an indicator connected to one of said terminals of said source of electrical energy; and

(c) circuit means responsive to a predetermined condition and connected to said indicator and the other of said terminals of said source of electrical energy and powered by said source of electrical energy through said indicator to control operation of said indicator responsive to said predetermined condition.

11. A detecting circuit as set forth in claim 10, wherein said predetermined condition is liquid level, said circuit means including means responsive to a predetermined level of liquid in a container to provide an indication thereof and means responsive to said indication to provide said control of operation of said indicator.

12. A detecting circuit as set forth in any preceding claim, further including means to provide at least one of turn-on or turn-off delay of said indicator.

**FIG. I**

FIG. 2

EP 0 405 835 A2

FIG. 3

80% PULSE TRAIN

REF RES

EMC FILTER

PROBE TO COOLANT

TURN-ON LAMP CHECK

AC LAMP DRIVER

FIG. 4

REF RES

EMC FILTER

PROBE TO COOLANT

SCR

EP 0 405 835 A2

Fig. 5.